# FASCICULE DE BREVET EUROPEEN

(11) **EP 3 878 710 B1**
(45) Date de publication et mention de la délivrance du brevet: **20.07.2022**
(21) Numéro de dépôt: 21161168.6
(22) Date de dépôt: 08.03.2021
(51) Int. Cl.: B61D 27/00, B60H 1/00, F24F 13/08, F24F 13/02

(54) **DISPOSITIF DE DIFFUSION D'UN FLUX D'AIR DANS AU MOINS DEUX ZONES D'UN VÉHICULE ET VÉHICULE ASSOCIÉ**
VORRICHTUNG ZUR VERTEILUNG EINES LUFTSTROMS IN MINDESTENS ZWEI ZONEN EINES FAHRZEUGS UND ENTSPRECHENDES FAHRZEUG
DEVICE FOR THE DISTRIBUTION OF A FLOW OF AIR IN AT LEAST TWO AREAS OF A VEHICLE AND ASSOCIATED VEHICLE

(30) Priorité: 09.03.2020 FR 2002316
(43) Date de publication de la demande: 15.09.2021
(73) Titulaire: ALSTOM Transport Technologies, 93400 Saint-Ouen (FR)
(72) Inventeur: DO, Huu-Thi, 17300 Rochefort (FR)
(74) Mandataire: Lavoix

(56) Documents cités:
- EP-A1- 3 530 540
- CN-U- 209 617 143

## Description

La présente invention concerne un dispositif de diffusion d'air dans au moins deux zones d'un véhicule, notamment un véhicule ferroviaire.

La présente invention concerne également un véhicule, notamment un véhicule ferroviaire, comprenant un tel dispositif de diffusion.

Le dispositif de diffusion est notamment raccordé à un système de climatisation. Des systèmes de climatisation sont connus. Ils sont notamment utilisés pour assurer un bon échange d'air entre l'intérieur et l'extérieur du véhicule ferroviaire et une bonne circulation d'air dans le compartiment voyageur. Ces systèmes de climatisation comprennent généralement un système de chauffage, ventilation et climatisation (mieux connu sous la désignation « système CVC » ou « système HVAC », de l'anglais « heating, ventilation, and air conditioning »), disposé en amont du dispositif de diffusion suivant le sens de circulation du flux d'air.

On connait notamment des documents CN 209 617 143 et EP 3 530 540 de tels dispositifs de diffusion d'air.

Le dispositif de diffusion peut permettre la diffusion d'air dans plusieurs compartiments. A cet effet, il est connu de relier le système de chauffage, ventilation et climatisation à un conduit principal qui se sépare en plusieurs conduits alimentant chacun un compartiment du véhicule.

Au niveau d'une séparation entre deux conduits, il est connu de placer un déflecteur constitué d'une paroi disposée sensiblement orthogonalement au flux d'air et orientant une partie du flux vers l'un des deux conduits, le reste du flux se dirigeant vers l'autre conduit.

Toutefois, un tel déflecteur augmente significativement les pertes de charge dans le dispositif de diffusion et nécessite donc l'utilisation d'une pompe de puissance importante afin de faire circuler l'air dans le dispositif de diffusion.

Un but de l'invention est alors d'obtenir un dispositif de diffusion présentant des pertes de charge réduites tout en permettant une bonne diffusion de l'air dans les différentes zones du véhicule.

A cet effet, l'invention a pour objet un dispositif de diffusion selon la revendication 1.

Le dispositif de diffusion peut comprendre l'une ou plusieurs caractéristiques des revendications 2 à 9.

L'invention concerne également un véhicule selon la revendication 10.

L'invention sera mieux comprise à la lecture de la description qui suit, donnée uniquement à titre d'exemple, et faite en se référant aux dessins annexés, sur lesquels :
[Fig 1] la figure 1 est une vue schématique en coupe suivant un plan vertical d'un véhicule selon l'invention ;
[Fig 2] la figure 2 est une vue en perspective d'un dispositif de diffusion selon l'invention disposé dans le véhicule de la figure 1 ; et
[Fig 3] la figure 3 est une vue de dessus du dispositif de diffusion de la figure 2.

Dans la description, les termes « horizontal », « vertical », « haut », « bas », « supérieur » et « inférieur » sont définis par rapport à une direction d'élévation d'un véhicule lorsqu'il est disposé sur des rails ou sur une route.

La direction longitudinale est définie par la direction de circulation du véhicule et la direction transversale est la direction sensiblement perpendiculaire à la direction longitudinale et à la direction d'élévation du véhicule.

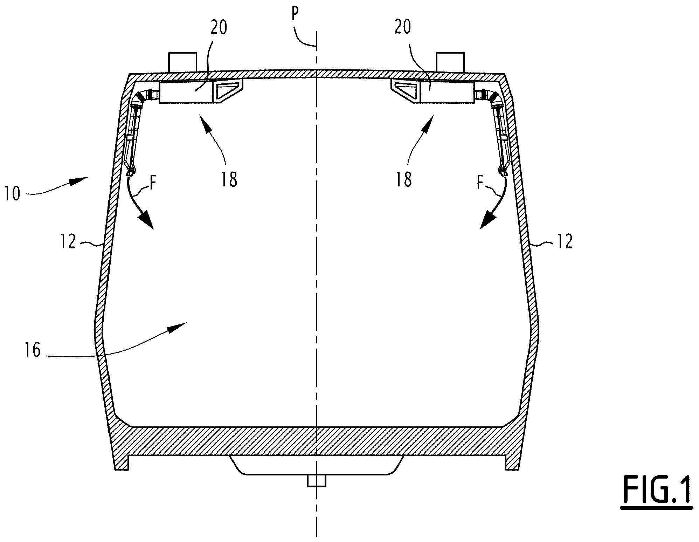

La figure 1 illustre une voiture 12 de véhicule 10 ferroviaire selon l'invention. En variante, le véhicule 10 est un véhicule de transport sur route, par exemple un autobus.

La voiture 12 de véhicule 10 ferroviaire comprend de façon connue au moins une caisse portée par un ou plusieurs bogies et des roues, non représentés.

Le véhicule 10 comprend une pluralité de compartiments 16 et au moins un système de climatisation 18.

Chaque compartiment 16 est par exemple un compartiment voyageur ou un compartiment annexe tel qu'un compartiment bagages, une cabine de conducteur, une passerelle entre deux compartiments voyageur, une cabine de toilettes, un local technique, etc.

Le compartiment 16 voyageur est configuré pour recevoir des passagers et comprend par exemple des sièges, non représentés, permettant aux voyageurs de s'assoir pendant le transport.

Selon un mode de réalisation, le système de climatisation 18 est monté au-dessus des compartiments 16. En variante, le système de climatisation 18 est installé sous les compartiments 16 ou dans toute autre position convenable.

Comme visible sur la figure 1, le véhicule 10 comprend ici deux systèmes de climatisation 18 disposés de part et d'autre d'un plan vertical longitudinal médian P, passant sensiblement par le centre de la voiture selon la direction transversale.

Le système de climatisation 18 et les compartiments 16 sont avantageusement séparés par une paroi de séparation, non représentée, formant le plafond des compartiments 16 dans le cas d'un système de climatisation 18 installé au-dessus des compartiments 16.

Le système de climatisation 18 produit et distribue un flux d'air F aux différents compartiments 16.

Le système de climatisation 18 comporte un groupe de climatisation, non représenté, produisant le flux d'air circulant et un dispositif de diffusion 20 distribuant le flux d'air F dans le véhicule 10. Le flux d'air F est représenté sur la figure 1 par une flèche sortant de chaque dispositif de diffusion 20.

Le groupe de climatisation permet l'échange d'air entre l'extérieur et l'intérieur du véhicule 10, par exemple en aspirant l'air de l'extérieur du véhicule 10 et en le refoulant vers l'intérieur du véhicule 10.

Avantageusement, le groupe de climatisation est propre à chauffer ou refroidir l'air ainsi échangé.

Le dispositif de diffusion 20 est propre à diffuser le flux d'air F dans au moins deux zones du véhicule 10 parmi une première zone et une deuxième zone.

Chaque zone est par exemple l'un des compartiments 16 ou une partie d'un compartiment 16.

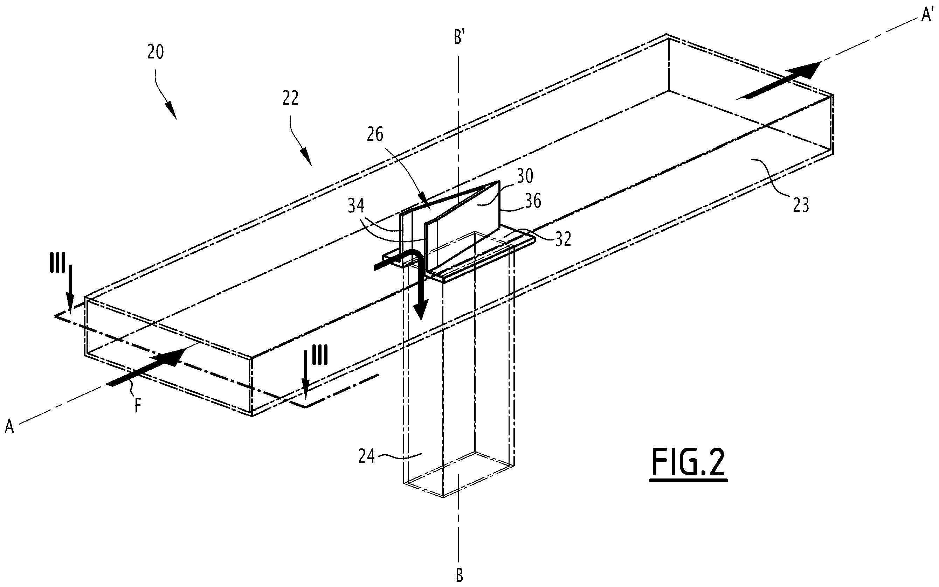

Comme visible sur la figure 2, le dispositif de diffusion 20 comprend un canal de circulation principal 22, un canal de circulation secondaire 24 et un organe de déviation 26.

Le canal de circulation principal 22 est propre à faire circuler le flux d'air F vers la première zone selon une direction principale A-A'.

Le canal de circulation principal 22 présente par exemple une section transversale par rapport à la direction principale A-A' de forme rectangulaire ou de trapèze.

Le canal de circulation principal 22 comprend alors quatre parois 23, opposées deux à deux.

En variante non représentée, la section transversale du canal de circulation principal 22 est circulaire.

Le canal de circulation principal 22 définit un orifice de passage 28 du flux d'air F vers la deuxième zone.

L'orifice de passage 28 est par exemple de forme rectangulaire ou circulaire.

Le canal de circulation secondaire 24 est relié fluidiquement au canal de circulation principal 22 par l'orifice de passage 28.

Le canal de circulation secondaire 24 est propre à faire circuler le flux d'air F vers la deuxième zone selon une direction secondaire B-B'.

Le canal de circulation principal 22 présente par exemple une section transversale par rapport à la direction secondaire B-B' de forme rectangulaire. En variante, la section transversale du canal de circulation principal 22 est circulaire.

La direction secondaire B-B' est avantageusement sensiblement perpendiculaire à la direction principale A-A'.

La surface de la section transversale du canal de circulation secondaire 24 est notamment inférieure à la surface de la section transversale du canal de circulation principale 22.

Comme visible sur la figure 2, l'organe de déviation 26 est disposé dans le canal de circulation principal 22 au niveau de l'orifice de passage 28.

En particulier, l'organe de déviation 26 recouvre en partie l'orifice de passage 28.

L'organe de déviation 26 est propre à orienter une partie du flux d'air F vers l'orifice de passage 28.

A cet effet, l'organe de déviation 26 comprend deux déflecteurs 30 et une paroi 32.

Chaque déflecteur 30 s'étend selon la direction principale A-A' entre un bord d'attaque 34 et un bord de fuite 36.

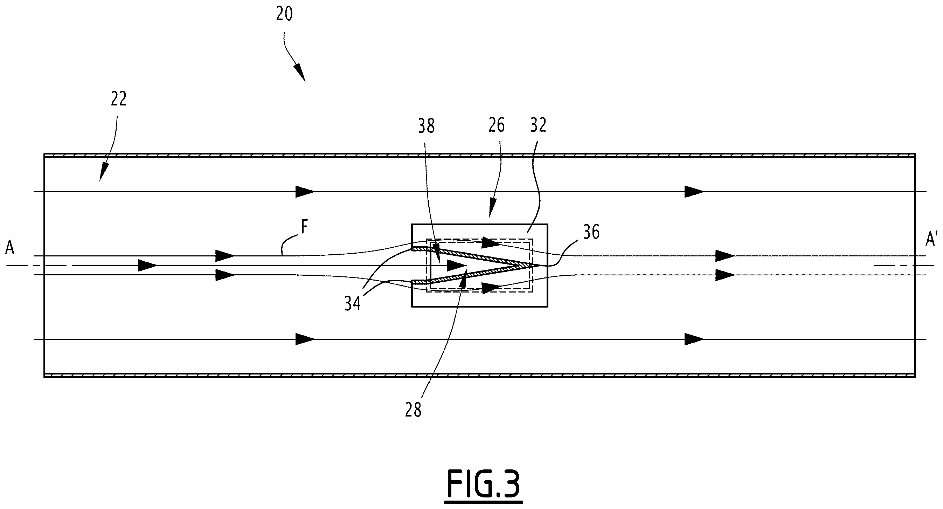

Comme visible sur les figures 2 et 3, les deux déflecteurs 30 s'étendent entre des bords d'attaques 32 différents et un même bord de fuite 36.

L'organe de déviation 26 forme un profil aérodynamique propre à séparer le flux d'air F.

Le bord d'attaque 34 est la section avant du profil aérodynamique faisant face au flux d'air F et où le flux d'air F va se séparer en deux. En particulier, le bord d'attaque 34 permet de séparer ce flux d'air F entre une partie continuant à circuler dans le canal de circulation principal 22 et une partie orientée vers l'orifice de passage 28.

Comme visible sur la figure 2, chaque bord d'attaque 34 s'étend entre des parois opposées 23 du canal de circulation principal 22, en particulier les parois 23 orthogonales à la direction secondaire B-B'.

Le bord de fuite 36 est la partie la plus arrière du profil dynamique où se rejoignent les deux composantes du flux d'air F séparé par les bords d'attaque 34.

Comme visible sur la figure 2, le bord de fuite 36 s'étend entre des parois opposées 23 du canal de circulation principal 22, en particulier les parois 23 orthogonales à la direction secondaire B-B'.

Ainsi, le bord de fuite 36 s'étend sensiblement perpendiculairement à la direction principale A-A'.

Avantageusement, le bord de fuite 36 est parallèle aux deux bords d'attaque 34.

Chaque déflecteur 30 s'étend selon un plan associé, les deux plans formant entre eux un angle α compris entre 1 et 36 degrés.

Avantageusement, les deux déflecteurs 30 sont venues de matière. Les deux déflecteurs 30 sont par exemple formées à partir d'une tôle pliée.

Dans un autre mode de réalisation non représenté, le bord de fuite 36 présente une forme courbe de concavité orientée vers l'orifice de passage 28.

La forme concave permet d'orienter le flux d'air F vers l'orifice de passage 28 en limitant les points d'arrêt pour le flux d'air F sur les déflecteurs 30 et donc en limitant les pertes de charge au niveau de l'organe de déviation 26.

Comme visible sur la figure 3, la paroi 32 couvre partiellement l'orifice de passage 28.

La paroi 32 est fixée sur le canal de circulation principal 22, par exemple au moyen de colle ou de soudure.

La paroi 32 définit une ouverture 38 sous forme triangulaire en regard de l'orifice de passage 28.

Chaque déflecteur 30 fait saillie hors de la paroi 32, avantageusement au niveau du rebord de l'ouverture 38.

Le fonctionnement du système de diffusion 20 selon l'invention va maintenant être décrit en référence aux figures 2 et 3.

Un flux d'air F est généré en amont du canal de circulation principal 22, au moyen du groupe de climatisation du système de climatisation 18.

Comme visible sur les figures, le flux d'air F pénètre dans le canal de circulation 22 et rencontre l'organe de déviation 26.

En particulier, le flux d'air F rencontre le bord d'attaque 34 de chaque déflecteur 30.

Au niveau de chaque bord d'attaque 34, le flux d'air F se sépare en deux, comme visible sur la figure 3, entre une première partie du flux d'air F continuant de circuler dans le canal de circulation principal 22 en contournant l'organe de déviation 26 et une deuxième partie du flux d'air F orientée vers l'orifice de passage 28.

Les deux premières parties du flux d'air F, associées chacune à l'un des deux déflecteurs 30, se rejoignent au niveau du bord de fuite 36 commun et circulent jusqu'à la première zone du véhicule 10 dans laquelle les premières parties du flux d'air F sont diffusées.

La deuxième partie du flux d'air F traverse l'ouverture 38 de la paroi 32 puis traverse l'orifice de passage 28 afin de pénétrer dans le canal de circulation secondaire 24.

La deuxième partie du flux d'air F circule alors dans le canal de circulation secondaire 24 jusqu'à la deuxième zone dans laquelle la deuxième partie du flux d'air F est diffusée.

On conçoit alors que la présente invention présente un certain nombre d'avantages.

En effet, le dispositif de diffusion 20 selon l'invention permet de réduire de pertes de charge grâce à sa forme profilée.

En particulier, le bord de fuite 36 permet aux lignes de courant du flux d'air F de se rejoindre proche de l'organe de déviation 26 et ainsi limiter les turbulences à l'arrière de celui-ci.

De plus, l'organe de déviation 26 permet une séparation du flux d'air F entre les deux canaux de circulation 22, 24 dans les proportions désirées en ajustant l'angle α entre les déflecteurs 30 et la taille de l'ouverture 38 dans la paroi 32.

Enfin, la fabrication de l'organe de déviation 26, par exemple au moyen d'une tôle pliée, est facile et peu onéreuse à mettre en œuvre.

L'organe de déviation 26 peut être aisément ajouté à un système de climatisation déjà existant.

## Revendications

1. Dispositif de diffusion (20) d'un flux d'air (F) dans au moins deux zones d'un véhicule (10), notamment un véhicule ferroviaire, parmi une première zone et une deuxième zone, le dispositif de diffusion (20) comprenant :
- un canal de circulation principal (22) propre à faire circuler le flux d'air vers la première zone selon une direction principale (A-A') et définissant un orifice de passage (28) du flux d'air (F) vers la deuxième zone ;
- un organe de déviation (26) disposé dans le canal de circulation principal (22) au niveau de l'orifice de passage (28), l'organe de déviation (26) étant propre à orienter une partie du flux d'air (F) vers l'orifice de passage (28),
**caractérisé en ce que** l'organe de déviation (26) comprend deux déflecteurs (30) s'étendant selon la direction principale (A-A') entre des bords d'attaques (34) différents et un même bord de fuite (36).

2. Dispositif de diffusion (20) selon la revendication 1, dans lequel le dispositif de diffusion (20) comprend un canal de circulation secondaire (24) relié fluidiquement au canal de circulation principal (22) par l'orifice de passage (28), la surface de la section transversale du canal de circulation secondaire (24) étant inférieure à la surface de la section transversale du canal de circulation principale (22).

3. Dispositif de diffusion (20) selon la revendication 2, dans lequel le canal de circulation secondaire (24) est propre à faire circuler la partie du flux d'air (F) selon une direction secondaire (B-B'), la direction secondaire (B-B') étant sensiblement perpendiculaire à la direction principale (A-A').

4. Dispositif de diffusion (20) selon l'une quelconque des revendications précédentes, dans lequel chaque déflecteur (30) s'étend selon un plan associé, les deux plans formant entre eux un angle (a) compris entre 1 et 36 degrés.

5. Dispositif de diffusion (20) selon l'une quelconque des revendications précédentes, dans lequel les deux déflecteurs (30) sont venus de matière.

6. Dispositif de diffusion (20) selon l'une quelconque des revendications précédentes, dans lequel l'organe de déviation (26) comprend une paroi (32) couvrant partiellement l'orifice de passage (28), chaque déflecteur (30) faisant saillie hors de ladite paroi (32).

7. Dispositif de diffusion (20) selon l'une quelconque des revendications précédentes, dans lequel le bord de fuite (36) s'étend entre des parois (33) opposées du canal de circulation principal (22).

8. Dispositif de diffusion (20) selon l'une quelconque des revendications précédentes, dans lequel le bord de fuite (36) s'étend sensiblement perpendiculairement à la direction principale (A-A').

9. Dispositif de diffusion (20) selon l'une quelconque des revendications 1 à 7, dans lequel le bord de fuite (36) présente une forme courbe de concavité orientée vers l'orifice de passage (28).

10. Véhicule (10), notamment véhicule ferroviaire, comprenant un dispositif de diffusion (20) selon l'une quelconque des revendications précédentes, la première zone étant un premier compartiment (16) du véhicule (10) et la deuxième zone étant un deuxième compartiment (16) du véhicule (10).

## Patentansprüche

1. Diffusionsvorrichtung (20) eines Luftstroms (F) in mindestens zwei Bereichen eines Fahrzeugs (10), insbesondere eines Schienenfahrzeugs, aus einem ersten Bereich und einem zweiten Bereich, die Diffusionsvorrichtung (20) umfassend:
- einen Hauptströmungskanal (22), der geeignet ist, um den Luftstrom in einer Hauptrichtung (A-A') zu dem ersten Bereich zirkulieren zu lassen, und eine Durchgangsöffnung (28) für den Luftstrom (F) zu dem zweiten Bereich definiert;
- ein Ablenkorgan (26), das in dem Hauptströmungskanal (22) auf Höhe der Durchgangsöffnung (28) angeordnet ist, wobei das Ablenkorgan (26) geeignet ist, um einen Teil des Luftstroms (F) in Richtung der Durchgangsöffnung (28) zu lenken,
**dadurch gekennzeichnet, dass** das Ablenkorgan (26) zwei Deflektoren (30) umfasst, die sich in der Hauptrichtung (A-A') zwischen unterschiedlichen Vorderkanten (34) und einer gleichen Hinterkante (36) erstrecken.

2. Diffusionsvorrichtung (20) nach Anspruch 1, wobei die Diffusionsvorrichtung (20) einen Nebenströmungskanal (24) umfasst, der über die Durchgangsöffnung (28) mit dem Hauptströmungskanal (22) fluidisch verbunden ist, wobei die Querschnittsfläche des Nebenströmungskanals (24) kleiner ist als die Querschnittsfläche des Hauptströmungskanals (22).

3. Diffusionsvorrichtung (20) nach Anspruch 2, wobei der Nebenströmungskanal (24) geeignet ist, um den Teil des Luftstroms (F) in einer sekundären Richtung (B-B') strömen zu lassen, wobei die sekundäre Richtung (B-B') im Wesentlichen senkrecht zu der Hauptrichtung (A-A') ist.

4. Diffusionsvorrichtung (20) nach einem der vorherigen Ansprüche, wobei sich jeder Deflektor (30) entlang einer zugehörigen Ebene erstreckt, wobei die zwei Ebenen untereinander einen Winkel (a) zwischen 1 und 36 Grad einschließen.

5. Diffusionsvorrichtung (20) nach einem der vorherigen Ansprüche, wobei die zwei Deflektoren (30) aus einem Material gefertigt sind.

6. Diffusionsvorrichtung (20) nach einem der vorherigen Ansprüche, wobei das Ablenkorgan (26) eine Wand (32) umfasst, die Durchgangsöffnung (28) teilweise abdeckt, wobei jeder Deflektor (30) aus der Wand (32) hervorsteht.

7. Diffusionsvorrichtung (20) nach einem der vorherigen Ansprüche, wobei sich die Hinterkante (36) zwischen gegenüberliegenden Wänden (33) des Hauptströmungskanals (22) erstreckt.

8. Diffusionsvorrichtung (20) nach einem der vorherigen Ansprüche, wobei sich die Hinterkante (36) im Wesentlichen senkrecht zu der Hauptrichtung (A-A') erstreckt.

9. Diffusionsvorrichtung (20) nach einem der Ansprüche 1 bis 7, wobei die Hinterkante (36) eine gekrümmte Form mit einer Konkavität aufweist, die zu der Durchgangsöffnung (28) gerichtet ist.

10. Fahrzeug (10), insbesondere Schienenfahrzeug, umfassend eine Diffusionsvorrichtung (20) nach einem der vorherigen Ansprüche, wobei der erste Bereich ein erstes Abteil (16) des Fahrzeugs (10) ist und der zweite Bereich ein zweites Abteil (16) des Fahrzeugs (10) ist.

## Claims

1. A device (20) for diffusing an air flow (F) in at least two zones of a vehicle (10), in particular a railway vehicle, among a first zone and a second zone, the diffusion device (20) comprising:
- a main circulation channel (22) adapted to circulate the air flow towards the first zone according to a main direction (A-A') and defining a passage orifice (28) for the air flow (F) towards the second zone;
- a deflection member (26) arranged in the main circulation channel (22) at the passage opening (28), the deflection member (26) being suitable for directing a part of the air flow (F) towards the passage opening (28),
**characterised in that** the deflection member (26) comprises two baffles (30) extending in the main direction (A-A') between different leading edges (34) and a single trailing edge (36).

2. The diffusion device (20) according to claim 1, wherein the diffuser device (20) comprises a secondary circulation channel (24) fluidly connected to the main flow channel (22) through the passage orifice (28), the cross-sectional area of the secondary circulation channel (24) being smaller than the cross-sectional area of the main circulation channel (22).

3. The diffusion device (20) according to claim 2, wherein the secondary circulation channel (24) is adapted to circulate the portion of the air flow (F) in a secondary direction (B-B'), the secondary direction (B-B') being substantially perpendicular to the main direction (A-A').

4. The diffusion device (20) according to any of the preceding claims, wherein each baffle (30) extends in an associated plane, the two planes forming an angle (a) between them of between 1 and 36 degrees.

5. The diffusion device (20) according to any one of the preceding claims, wherein the two baffles (30) are formed of the same piece.

6. The diffusion device (20) according to any one of the preceding claims, wherein the deflection member (26) comprises a wall (32) partially covering the passage orifice (28), each deflection member (30) protruding from said wall (32).

7. The diffusion device (20) according to any one of the preceding claims, wherein the trailing edge (36) extends between opposing walls (33) of the main circulation channel (22).

8. The diffusion device (20) according to any one of the preceding claims, wherein the trailing edge (36) extends substantially perpendicular to the main direction (A-A').

9. The diffusion device (20) according to any one of claims 1 to 7, wherein the trailing edge (36) has a curved shape of concavity directed towards the passage orifice (28).

10. A vehicle (10), in particular a railway vehicle, comprising a diffusion device (20) according to any of the preceding claims, the first zone being a first compartment (16) of the vehicle (10) and the second zone being a second compartment (16) of the vehicle (10).
